# EUROPEAN PATENT APPLICATION

(11) **EP 1 496 247 A1**
(43) Date of publication of application: **12.01.2005**
(21) Application number: 04254084.9
(22) Date of filing: 07.07.2004
(51) Int. Cl.: F02M 69/52, F02M 43/00

(54) **Dual fuel delivery system**

(30) Priority: 08.07.2003 AU 2003903612
(71) Applicant: Hunt, James Richard, Gateshead, New South Wales 2290 (AU); Turner, Geoffrey Russell, Leeton, New South Wales 2705 (AU); Shinkarenko, Andrei Vadimovitch, Gateshead, New South Wales 2290 (AU)
(72) Inventor: Turner, Geoffrey Russell, Leeton New South Wales 2705 (AU); Hunt, James Richard, Gateshead New South Wales 2290 (AU)
(74) Representative: Bucks, Teresa Anne

(57) **Abstract**

A fuel delivery system for an internal combustion engine is disclosed which has an injector for delivering diesel fuel, and a fuel delivery system for delivering liquid petroleum gas fuel. The fuels are delivered concurrently to the engine. A first transducer measures the amount of diesel fuel supplied to the engine by the injector, and a second flow transducer measures the amount of diesel fuel returned from the injector. A measuring unit determines the amount of fuel delivered by the injector to the engine by subtracting the amount as measured by the second flow meter from the amount measured by the first flow meter. Thus, the instantaneous flow rate of the diesel fuel can be determined and therefore, the amount of LPG which should be delivered in order to control emissions from the engine and to set the right ratio of the diesel fuel to the LPG fuel can also be determined.

## Description

### Field of the Invention

This invention relates to a fuel delivery system and, in particular, to a fuel delivery system for delivering two different types of fuel to an engine.

### Background Art

It is known that in order to reduce fuel consumption and cost of fuel, two different types of fuel can be delivered to the cylinders of an engine. Most typically, diesel engines fall into this category, and in order to reduce the amount of diesel fuel which is consumed, the fuel delivery system is configured to supply concurrently liquid petroleum gas and diesel to the engine. International Application PCT/AU02/00453 discloses systems for supplying liquid petroleum gas and diesel concurrently to the cylinders of a diesel engine.

One problem which does arise with the concurrent supply of such fuels is monitoring the amount of the diesel fuel so the correct amount of liquid petroleum gas can be supplied having regard to the engine operating conditions, so that the output power level from the diesel engine can be determined and also to control emissions and to set the supply ratio of the two fuels.

Monitoring the amount of diesel fuel which is actually supplied to the engine is complicated by the fact that not all of the fuel which is drawn from the tank is actually supplied to the engine. Some of the fuel is delivered to an injector and the remainder of the fuel is returned back to the diesel tank.

### Summary of the Invention

The object of the invention is to provide a fuel delivery system which can provide a measure of the amount of primary fuel supplied to an engine so that the correct amount of secondary fuel can also be concurrently supplied.

### Summary of the Invention

The invention provides a fuel delivery system for an internal combustion engine, comprising:
at least one injector for delivering a primary fuel to the engine;
a first fuel delivery system for delivering the primary fuel to the injector;
a second fuel delivery system for concurrently delivering a second fuel to the engine;
a first monitor for measuring the amount of fuel supplied by the first fuel delivery system;
a second monitor for measuring the amount of fuel supplied by the first fuel delivery system, but which is not delivered by the injector to the engine; and
a measuring unit for determining the amount of fuel delivered by the injector to the engine by subtracting the amount as measured by the second monitor from the amount as measured by the first monitor.

Thus, by using a differential measuring technique to measure the difference between the amount of fuel supplied and the amount of fuel not injected to the engine, a measure of the actual amount of fuel delivered to the engine can be determined so that an instantaneous flow rate of the diesel fuel can be determined. This therefore enables the power output level from the diesel fuel within the engine to be determined, and also therefore the amount of secondary fuel which should be delivered in order to control emissions from the engine and to set the right ratio of the primary fuel to the secondary fuel.

Preferably the first and second monitors are flow transducers.

Preferably the flow transducers are of the type which comprises a rotary member which is rotated by flow of fuel through the transducer so that the rate of rotation provides an output signal indicative of the amount of fuel supplied through the transducers.

Preferably the first fuel delivery system comprises a primary fuel tank and a pump for delivering fuel to the injector, and the first monitor is located between the tank and the diesel pump in a fuel supply line from the diesel tank to the fuel pump, and the second monitor is located in a fuel return line extending between the pump and the tank.

Preferably the system further includes an electronic control unit for controlling the supply of primary fuel by the injector, and the supply of secondary fuel by the secondary fuel delivery system, the unit including a fuel map for determining the amount of secondary fuel which should be delivered having regard to the amount of primary fuel which is delivered to the engine, and at least one engine operating parameter.

Preferably the engine operating parameter is one or more parameters selected from the group of engine RPM, temperature, and fuel temperature.

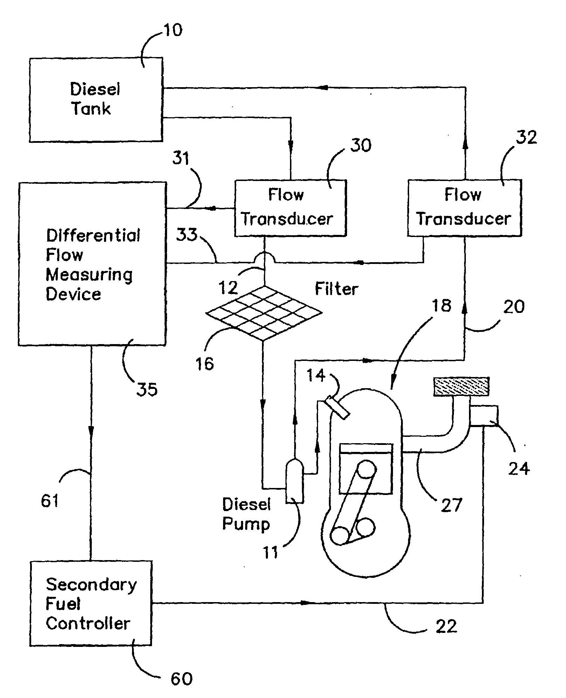

### Brief Description of the Drawing

A preferred embodiment of the invention will be described, by way of example, with reference to the accompanying drawing, which shows a fuel delivery system according to the preferred embodiment

### Detailed Description of the Preferred Embodiment

A fuel delivery system is shown in the drawing which comprises a tank 10 for storing a primary fuel such as diesel fuel. The diesel tank 10 is connected to a diesel pump 11 by a fuel supply line 12. The fuel supply line 12 includes a filter 16. The diesel pump 11 supplies diesel fuel to an injector 14 which in turn ejects the fuel to an engine 18.

The pump 11 is also connected to the tank 10 by a fuel return line 20.

A second fuel delivery system includes a fuel delivery line 22 for delivery a secondary fuel such as liquid petroleum gas to a liquid petroleum gas injecting system 24. The system 24 is disclosed in our above-mentioned International Application PCT/AU02/00453, and also in Australian Provisional Application 2002950972. The contents of these two applications are incorporated into this specification by this reference.

A first flow transducer 30 is connected in the fuel delivery line 12, and a second flow transducer is connected in the fuel return line 20. The transducers 30 and 32 are generally of the rotary type, which include a rotor or wheel which is rotated by the passage of fuel through the transducers, so that each rotation of the wheel produces an output signal respectively on lines 31 and 33, which are received by a flow measuring unit 35. The transducers 30 and 32 are calibrated so they will read identically if the same amount of fuel were to be delivered through each transducer.

The second fuel delivery system also includes a secondary fuel controller 60 which may be part of the normal engine electronic control unit, or simply a separate control unit. The controller 60 determines the amount of secondary fuel such as liquid petroleum gas which should be delivered, having regard to the amount of diesel fuel which is being delivered by the injector 14, and the operating conditions of the engine 18.

The unit 60 controls the delivery of the LPG gas by controlling the liquid gas injectors within the system 24 by a suitable pulse supplied to the injectors, which causes the injectors to open for a predetermined time period to allow a predetermined amount of fuel to be injected into the engine 18 via the fuel/air inlet system 27 of the engine 18.

The signals which are supplied from the transducers 30 and 32 on the lines 31 and 33 are in the form of pulses of a predetermined frequency having regard to the speed of rotation of the rotor within the transducers (and therefore the amount of fuel which is passing through the transducers). Thus, the amount of fuel which is actually delivered by the injector 14 can be determined from the amount which is delivered through the supply line 12 minus the amount which is returned to the tank via the return line 20. This is simply calculated by the differential flow measuring device subtracting the frequency of the signal on line 33 from the frequency of the signal on line 31. This provides a frequency differential indicative of the amount of fuel supplied by the injector 14 to the engine 18.

A voltage range is assigned to the differential frequency range, and this voltage range is then supplied to the unit 60 via signal line 61. Thus, the unit 60 is supplied with a measure of the amount of diesel fuel which is actually being delivered. The fuel controller 60 also receives information relating to the operating parameters of the engine, such as the engine RPM, ambient temperature, and the temperature of the liquid petroleum gas which is being supplied. The voltage range which is supplied therefore provides a measure of the instantaneous flow rate of diesel gas to the engine 18 and this value can be cross-references with the engine RPM, temperature and fuel temperature in a fuel map in order to calculate the liquid petroleum gas amount required.

The instantaneous diesel flow rate combined with the RPM of the engine defines the power output level from the diesel fuel within the diesel engine 18. Where a secondary fuel, such as liquid petroleum gas is being introduced concurrently, it is necessary to know the diesel power level in order to safely add the liquid petroleum gas. Knowing the diesel fuel instantaneous flow rate enables finite control of the liquid petroleum gas fuel injection in order to control emissions from the engine, and knowing the diesel fuel instantaneous flow rate enables finite control of the diesel/liquid petroleum gas fuel supply ratio. By controlling the supply ratio, over-fuelling of the engine is prevented which protects engines from damage. By using the differential measurement of the flow rates from the transducers 30 and 32 for the mapping of the liquid petroleum gas fuel, the engine is protected from modifications that may increase engine power, by increasing diesel flow into the engine (ie. larger specification diesel pumps or diesel leaks into the engine).

The unit 35 may be fitted with averaging circuits or other trims for the purpose of modifying the output from the unit 35 for various purposes. The unit 35 may also be fitted as part of the unit 60 rather than a separate unit.

In the preferred embodiment of the invention an injector is associated with each of the cylinders of the engine 18 and a single diesel pump 11 supplies fuel to each of those injectors. However, in other embodiments, more than one pump 11 could be used so that each pump supplies fuel to some of the injectors 14. In this case, the system may include more than one return line 20 with a flow transducer 32 in each of the lines 20. The output of the flow transducers 32 is added before the total flow rate determined by the transducers 32 is supplied to the unit 35. In another arrangement, the return lines from the pumps 11 could be combined into a single line, such as the line 20 so that only one transducer 32 need be provided.

In the claims which follow and in the preceding description of the invention, except where the context requires otherwise due to express language or necessary implication, the word "comprise", or variations such as "comprises" or "comprising", is used in an inclusive sense, ie. to specify the presence of the stated features but not to preclude the presence or addition of further features in various embodiments of the invention.

Since modifications within the spirit and scope of the invention may readily be effected by persons skilled within the art, it is to be understood that this invention is not limited to the particular embodiment described by way of example hereinabove.

## Claims

1. A fuel delivery system for an internal combustion engine, comprising:
at least one injector for delivering a primary fuel to the engine;
a first fuel delivery system for delivering the primary fuel to the injector;
a second fuel delivery system for concurrently delivering a second fuel to the engine;
a first monitor for measuring the amount of fuel supplied by the first fuel delivery system;
a second monitor for measuring the amount of fuel supplied by the first fuel delivery system, but which is not delivered by the injector to the engine; and
a measuring unit for determining the amount of fuel delivered by the injector to the engine by subtracting the amount as measured by the second monitor from the amount as measured by the first monitor.

2. The system of claim 1 wherein the first and second monitors are flow transducers.

3. The system of claim 1 or 2 wherein the flow transducers are of the type which comprises a rotary member which is rotated by flow of fuel through the transducer so that the rate of rotation provides an output signal indicative of the amount of fuel supplied through the transducers.

4. The system of any one of claims 1 to 3 wherein the first fuel delivery system comprises a primary fuel tank and a pump for delivering fuel to the injector, and the first monitor is located between the tank and the diesel pump in a fuel supply line from the diesel tank to the fuel pump, and the second monitor is located in a fuel return line extending between the pump and the tank.

5. The system of any one of claims 1 to 4 wherein the system further includes an electronic control unit for controlling the supply of primary fuel by the injector, and the supply of secondary fuel by the secondary fuel delivery system, the unit including a fuel map for determining the amount of secondary fuel which should be delivered having regard to the amount of primary fuel which is delivered to the engine, and at least one engine operating parameter.

6. The system of claim 5 wherein the engine operating parameter is one or more parameters selected from the group of engine RPM, temperature, and fuel temperature.

7. An engine having a fuel delivery system according to any one of claims 1 to 6.

8. A fuel delivery system substantially as hereinbefore described with reference to the accompanying drawing.
